# EUROPEAN PATENT APPLICATION

(11) **EP 2 256 658 A1**
(43) Date of publication of application: **01.12.2010**
(21) Application number: 09161160.8
(22) Date of filing: 26.05.2009
(51) Int. Cl.: G06F 21/00

(54) **Method of executing an application embedded in a portable electronic device**

(71) Applicant: Gemalto SA, 92190 Meudon (FR)
(72) Inventor: Millet, François, 13600 La Ciotat (FR); Chafer, Sylvain, 13720 La Bouilladisse (FR); Dehlinger, Franck, 138687 Singapore (SG); Marseille, François-Xavier, 78160 Marly le Roi (FR)

(57) **Abstract**

The invention is a method of executing an application embedded in a portable electronic device. The application comprises one instruction handling an object. The electronic device comprises a firewall which is intended to check the compliance of the object with preset security rules. The portable electronic device comprises a volatile memory area intended to store a data set uniquely associated to the object. The data set comprises an indicator reflecting the result of the checking of the compliance of the object with the preset security rules. The method comprises the following steps before execution of the instruction:
- checking the presence in the volatile memory area of a data set associated to the object and comprising an indicator reflecting a successful checking of security rules,
- if successful in the checking of the data set, authorizing the execution of the instruction without further security rules checking done by the firewall.

## Description

### (Field of the invention)

The present invention relates to methods of executing applications embedded in portable electronic devices. It relates particularly to methods of executing applications whose instructions must comply with security rules.

### (Prior art)

Portable electronic devices are small machines comprising a memory, a microprocessor and an operating system for computing treatments. In general, portable electronic devices comprise a plurality of memories of different types. For example, they may comprise RAM, ROM, EEPROM or Flash memories. Portable electronic devices have limited computing resources and are intended to be connected to a host machine. For example, smart cards are portable electronic devices. The portable electronic devices may embed an object-oriented virtual machine in order to be able to run applications written in an object-oriented language.

In a Smart Card based Operating System most commands received from a connected host machine are dispatched to the currently selected application. If the currently selected application is identified as a JavaCard ® Applet the incoming command processing is delegated to the Operating System JavaCard subsystem which is also called JavaCard ® Runtime Environment or JCRE. The Javacard ® subsystem dispatches the command to the targeted application by starting its Virtual Machine interpretation loop on one of the selected application entry point. Such entry point may correspond to install, select or process treatment for example. During the whole Javacard ® bytecodes interpretation sequence the JCRE ensures that the current flow of execution does not try to perform some illegal operations by applying the firewalling rules described in the Javacard ® 2.x specifications.

The JCRE ensures a good level of isolation between applet contexts. It means that conceptually it is the JCRE responsibility to provide protection against execution of incorrect bytecode sequences. The security verifications are carried out thanks to a firewall. When a Java instruction is going to be executed, the associated security conditions must be checked and met otherwise a security exception is raised.

There is a need for improving the time allocated to the checking of security rules when an application is executed on a portable electronic device.

### (Summary of the Invention)

An object of the invention is to solve the above mentioned technical problem.

The object of the present invention is a method for executing an application which is embedded in a portable electronic device. The application comprises at least one instruction handling a first data. The portable electronic device comprises a firewall which is intended to check the compliance of the first data with preset security rules. The portable electronic device comprises a volatile memory area which is intended to store a data set uniquely associated to the first data. The data set comprises an indicator that reflects the result of the checking of the compliance of the first data with the preset security rules. The method comprises the following steps before execution of the instruction:
- checking the presence in the volatile memory area of a data set which is associated to the first data and which comprises an indicator reflecting a successful checking of security rules,
- if successful in the checking of the data set, authorizing the execution of the instruction without further security rules checking done by the firewall.

In case of successful data set checking, the method may comprise the further step of retrieving meta-data from the data set, wherein said meta-data are related to the first data.

If there is no data set associated to the first data in the volatile memory area, the method may comprise the further steps of:
- creating a new data set in the volatile memory area, said new data set being associated to the first data and comprising a new indicator,
- checking the compliance of the first data associated to the instruction with the preset security rules,
- updating the new indicator of the new data set with the result of the checking of the compliance of the first data with the security rules.

Advantageously, the method may comprise the further step of updating the new data set with metadata which are related to the first data.

In a preferred embodiment, the first data may comprise a descriptor and the new data set may be updated with part or the whole of the descriptor of the first data.

Advantageously, the application may be written in an object-oriented language, the first data may be an object and the portable electronic device may comprise a virtual machine.

In particular the application and the virtual machine may comply with JavaCard ® 2.x standard requirements.

In a preferred embodiment, the access to said volatile memory area is restricted to the virtual machine.

Another object of the invention is a portable electronic device comprising an application and a firewall which is intended to check the compliance of data with preset security rules. The application comprises at least one instruction handling a first data. The portable electronic device comprises a volatile memory area which is intended to store a data set uniquely associated to the first data. The data set comprises an indicator reflecting the result of the checking of the compliance of the first data with the preset security rules. The portable electronic device comprises first and second means. The first means is capable of checking the presence in the volatile memory area of the data set which is associated to the first data and which comprises an indicator reflecting a successful checking of security rules. The second means is capable of authorizing the execution of the instruction without further security rules checking done by the firewall in case of successful data set checking.

Advantageously, the portable electronic device may comprise a third means which is capable of creating and initializing a new data set in the volatile memory area, said new data set being associated to the first data.

The portable electronic device may comprise a fourth means capable of clearing the volatile memory area when a preset event occurs.

In a preferred embodiment, the application may be written in an object-oriented language, the first data may be an object and the portable electronic device may comprise a virtual machine.

Advantageously, the application and the virtual machine may comply with JavaCard ® 2.x standard requirements.

The portable electronic device may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a portable electronic device of smart card type according to the invention;
- Figure 2 is an example of security rules checking sequence according to prior art; and
- Figure 3 is an example of security rules checking sequence according to the invention.

### (Detailed description of the preferred embodiments)

The invention may apply to any types of portable electronic device comprising a firewall intended to check security rules before execution of the application instructions. Although the following embodiments are given for an application written in object-oriented language, the invention may apply to the execution of applications written in any languages. In this specification the word "object" must be understood as any data entity which is handled by an instruction. Moreover, the wording "instruction execution" must be understood as the running of the instruction either through an execution or through an interpretation mechanism.

Each application instruction handles an object whose security rules must be checked by the firewall. The present invention relies on the fact that the firewall checking is made only when necessary thanks to a specific secured memory area which stores data related to object access. The secured memory area acts as a memory cache. Access rules of each object are checked only once for a given execution context.

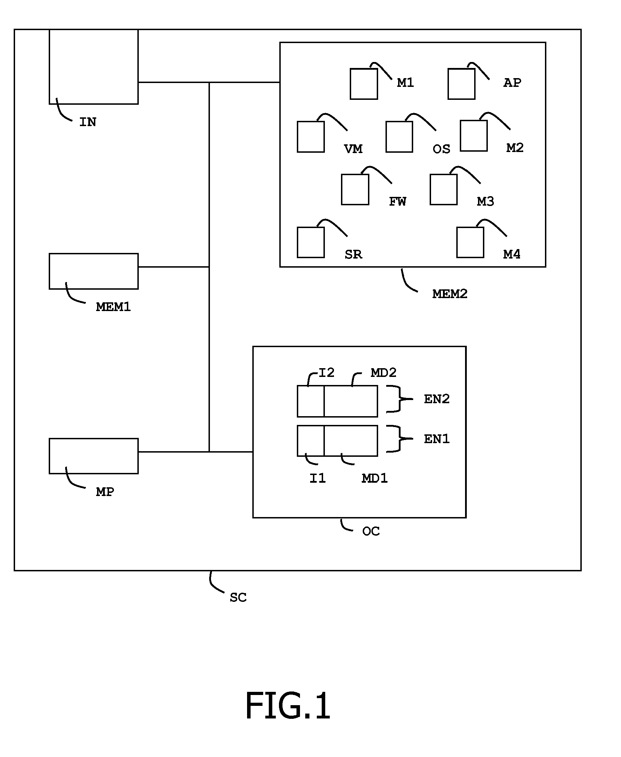

**Figure 1** shows the architecture of a portable electronic device of smart card SC type according to the invention. In this example, the portable electronic device SC is a Java Card ® smart card.

The portable electronic device SC comprises a working memory MEM1 of RAM type, a non volatile memory MEM2, a volatile memory area OC, a microprocessor MP and a communication interface IN. The non volatile memory MEM2 comprises an operating system OS, an object-oriented virtual machine VM, an application AP compiled in intermediate code, a firewall FW, security rules SR and four means M1, M2, M3 and M4. The application AP is intended to be run by the virtual machine VM. In a preferred embodiment the application AP is a JavaCard ® applet. The portable electronic device is intended to be connected to a host machine through the communication interface IN. For example, the host machine may be a personal computer or a mobile phone.

The volatile memory area OC comprises two data sets EN1 and EN2. The data set EN1 is related to a first object OB1 and the data set EN2 is related to a second object OB2. The data set EN1 comprises an indicator I1 and a metadata MD1 which depends on the first object OB1. The data set EN2 comprises an indicator I2 and a metadata MD2 which depends on the second object OB2. The indicator I1, respectively I2, is intended to contain a value reflecting the result of the checking of the compliance of the first object OB1, respectively the second object OB2, with the preset security rules SR. For example, the indicators I1 and I2 may be stored on one bit, where "0" stands for "successful check" and "1" stands for "unsuccessful check." For instance, the metadata MD1 and MD2 may correspond to security information, privileges, location and type of the corresponding object data. In a preferred embodiment, the metadata contains data extracted from the corresponding object descriptor.

Advantageously, the data set EN1, respectively EN2, may comprise a reference to the first object OB1, respectively to the second object OB2. For example addresses may be used as references.

Alternatively, the memory area OC may be a non volatile memory which is cleared during a Reset of the card SC.

The memory MEM2 may be NAND flash or EEPROM memory or another type of non volatile memory.

In a preferred embodiment, the memories MEM1 and OC are implemented in a unique memory component.

Alternatively, the memories MEM1 and OC may be implemented in several memory components.

The first means M1 is capable of checking the presence in the volatile memory area OC of a data set which is associated to a targeted object. When a data set is found into the memory area OC, the first means M1 is also capable of checking if the found data set comprises an indicator reflecting a successful checking of security rules.

The second means M2 is capable of authorizing the execution of the instruction related to the targeted object without further security rules checking done by the firewall when a compliant data set has been found in the memory area OC by the first means M1. The second means M2 is also capable of authorizing the execution of the instruction related to the targeted object when security rules checking have been successfully done by the firewall. It may happen when the memory area OC does not comprise a relevant data set corresponding to the targeted object when the first means M1 performs its checking.

The third means M3 is capable of creating and initializing a new data set in the volatile memory area OC. The new data set is associated to the targeted object handled by the instruction to be executed.

The fourth means M4 is capable of clearing the volatile memory area OC when the execution context is changed. For example, the execution context is changed when the portable electronic device SC is reset or when another application starts running on the portable electronic device SC.

Advantageously, the fourth means M4 may be capable of clearing only a part of the volatile memory area OC when the execution context is changed.

Alternatively, the fourth means M4 may be capable of clearing the whole volatile memory area OC when the execution context is changed.

The memory area OC is a secure area whose access is restricted. In a preferred embodiment only the means M1 has access rights allowing to read the memory area OC content. In a preferred embodiment only the means M3 and M4 have access rights allowing to write into the memory area OC.

Advantageously, the access to the memory area OC may be restricted to the memory area OC part which contains data associated to the current execution context.

In a preferred embodiment, the memory area OC is directly managed by the JCRE. Alternatively the memory area OC may be managed by the firewall FW.

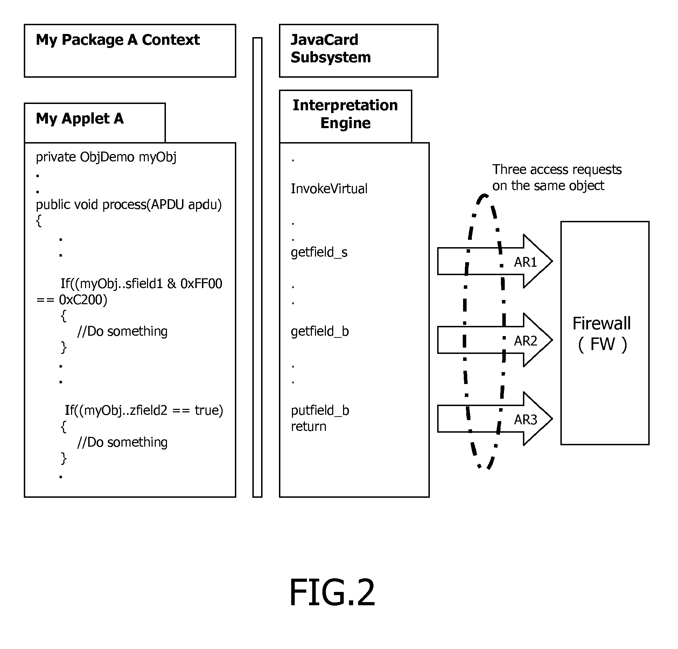

**Figure 2** shows an example of security rules checking sequence according to the prior art.

The application "My Applet A" defines an object myObj and several methods which handle the object myObj. The virtual machine VM comprises an interpretation engine which is in charge of executing the application. Each time a method is invoked, the interpretation engine automatically asks the Firewall FW for a check of the security rules of the object corresponding to the current invoked method. In the example of Figure 2, three consecutive methods (getfield_s, getfield_b and putfield_b) are invoked for the same object myObj. Thus three access requests AR1, AR2 and AR3 are successively sent to the firewall FW for the same object. Each access request received by the firewall FW generates a full security rules checking.

Thus during the JavaCard ® methods interpretation, the JavaCard ® virtual machine VM engine spends a non-negligible part of time on performing security checks to determine if in the current execution context an object can be accessed or if a method can be called. Each time an object is accessed, the firewall rules are applied even if in the current flow of interpretation the same object was manipulated a few instructions before. This is particularly inefficient and unnecessary since as long as the execution context is not changed there is no need to verify more than once the access rules validity for a same object.

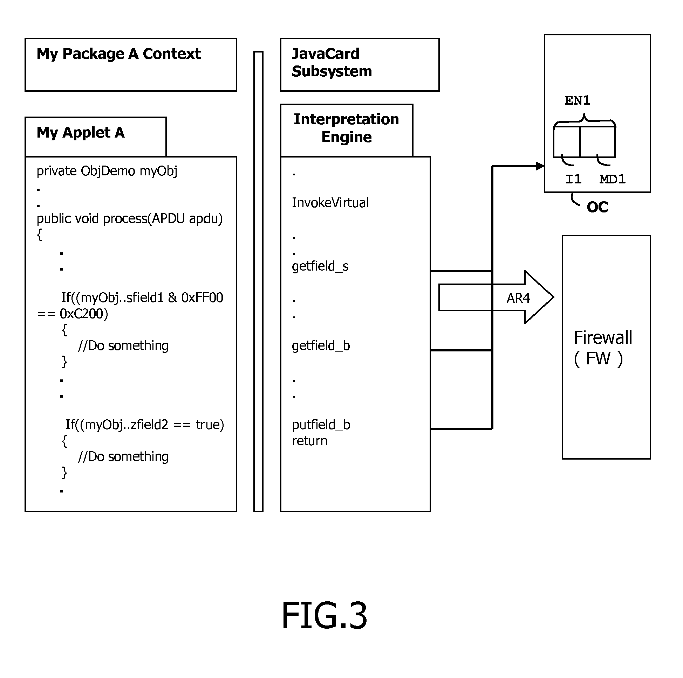

**Figure 3** shows an example of security rules checking sequence according to the invention.

According to the invention, a specific memory area OC holds information on currently manipulated objects. A role of cache for object access is assigned to the memory area OC. The memory area OC is a volatile memory area intended to comprise a plurality of data sets. Each data set is associated to one object and contains relevant information on its associated object. The format of the data sets may be various. Each data set contains an indicator telling if the access to the object (this data set belongs to) has been verified and allowed in the current execution context.

According to the invention all manipulated objects are accessed through the memory area OC during the JavaCard ® VM runtime sequences. As soon as a new object is manipulated a new data set is created, assigned to the new object and its content is filled with data corresponding to the new object status. In other words, when the checking of the memory area OC shows that no data set corresponding to the targeted object is present in the memory area OC, a new data set is created in the memory area OC for the targeted object. Then the security rules are checked by the firewall FW and the indicator of the new data set is updated according to the firewall checking result. Similarly when the checking of the memory area OC shows that the data set corresponding to the targeted object comprises an indicator showing that the security rules have not been successfully checked, the security rules are checked by the firewall FW and the indicator of the relevant data set is updated according to the new firewall checking result. In a preferred embodiment the indicator is a part of the data set. Alternatively, the indicator may be the data set itself. The checking of the indicator corresponds to the checking of the presence of the relevant data set in the memory area OC. In this case, the data set is removed from the memory area OC when the firewall checking is unsuccessful.

In the example of Figure 3, although three consecutive methods (getfield_s, getfield_b and putfield_b) are invoked for the same object myObj, only one access request AR4 is sent to the firewall FW and generates a full security rules checking. The object access validation is not done more than necessary thanks to the memory area OC content. Each object access is checked only once for a given execution context. The duration required for accessing data in the memory area OC is lower than the duration required for the full security rules checking of an object. Thanks to the invention, time is saved when executing an application in a secure way.

According to the Javacard ® 2.x specifications the object creation model is persistent: accessing objects metadata also implies reading the non-volatile memory area where objects are stored. This non-volatile memory area is called the Javacard ® Applet persistent heap.

Advantageously, the data set may additionally gather other metadata values. For example the data set may additionally comprise type and security information, location of the object data, potentially a partial or complete copy of the descriptor of the associated object. The metadata may correspond to administrative data.

In most cases, during JavaCard ® bytecodes processing, the JavaCard ® virtual machine accesses an object for retrieving relevant object data (such as object type, length, privileges, etc.) in order to be able to perform coherency checks. All data used to perform those verifications are usually gathered in a metadata area associated with the object. This object metadata structure is commonly named object descriptor.

Each time a check has to be done the following operations are executed:
- Retrieving of the object descriptor location,
- Reading of the object descriptor structure. The reading operation may be carried out several times depending on the nature of the ongoing verification.

Thanks to the invention the JCRE may use the data set which is stored in the memory area OC for retrieving data related to a targeted object. For example the JCRE may get the type of an object or the owner of an object through the memory area OC instead of getting this data from the Javacard ® Applet persistent heap.

Thanks to the invention the JCRE may get data related to a target object without accessing the persistent metadata area associated to an object.

The duration required for accessing a data stored in the volatile memory area OC is lower than the duration required for accessing the same data stored in non-volatile memory. An advantage of the invention is to allow the JCRE to save time when getting metadata from the volatile memory area OC instead of getting the same data from a non-volatile memory.

Another advantage of the invention is to avoid intensive non-volatile memory access during the application execution.

## Claims

1. A **method** for executing an application (AP) embedded in a portable electronic device (SC), said application (AP) comprising at least one instruction (INS1) handling a first data (OB1), said electronic device (SC) comprising a firewall (FW) which is intended to check the compliance of the first data (OB1) with preset security rules,
**characterized in that** the portable electronic device (SC) comprises a volatile memory area (OC) intended to store a data set (EN1) uniquely associated to the first data (OB1), said data set (EN1) comprising an indicator (11) reflecting the result of the checking of the compliance of the first data (OB1) with the preset security rules and **in that** said method comprises the following steps before execution of said instruction (INS1):
- checking the presence in the volatile memory area (OC) of the data set (EN1) associated to the first data (OB1) and comprising an indicator (I1) reflecting a successful checking of security rules,
- if successful in the checking of the data set (EN1), authorizing the execution of said instruction (INS1) without further security rules checking done by the firewall (FW).

2. A method according to claim 1, said method comprising the further step in case of successful data set (EN1) checking:
- retrieving from the data set (EN1) meta-data which are related to the first data (OB1).

3. A method according to claim 1 or 2, said method comprising the further steps in case of unsuccessful data set (EN1) presence checking:
- creating a new data set in the volatile memory area (OC), said new data set being associated to the first data (OB1) and comprising a new indicator,
- checking the compliance of the first data (OB1) associated to the instruction (INS1) with the preset security rules,
- updating the new indicator of the new data set with the result of the checking of the compliance of the first data (OB1) with the security rules.

4. A method according to claims 3, said method comprising the further step:
- updating the new data set with metadata which are related to the first data (OB1).

5. A method according to claims 4, wherein said first data (OB1) comprises a descriptor and wherein the new data set is updated with part or the whole of the descriptor of the first data (OB1).

6. A method according to anyone of claims 1 to 5, wherein said application (AP) is written in an object-oriented language, wherein said first data (OB1) is an object and wherein said portable electronic device (SC) comprises a virtual machine (VM).

7. A method according to claim 6, wherein the application (AP) and the virtual machine (VM) comply with JavaCard ® 2.x standard requirements.

8. A method according to anyone of claims 6 to 7, wherein the access to said volatile memory area (OC) is restricted to the virtual machine (VM).

9. A **portable electronic device** (SC) comprising an application (AP) and a firewall (FW) which is intended to check the compliance of data with preset security rules (SR), said application (AP) comprising at least one instruction (INS1) handling a first data (OB1),
**characterized in that** said portable electronic device (SC) comprises a volatile memory area (OC) intended to store a data set (EN1) uniquely associated to the first data (OB1), said data set (EN1) comprising an indicator (I1) reflecting the result of the checking of the compliance of the first data (OB1) with the preset security rules (SR) and **in that** said portable electronic device (SC) comprises first and second means (M1, M2), said first means (M1) being able to check the presence in the volatile memory area (OC) of the data set (EN1) associated to the first data (OB1) and comprising an indicator (I1) reflecting a successful checking of security rules, said second means (M2) being able to authorize the execution of said instruction (INS1) without further security rules checking done by the firewall (FW) in case of successful data set (EN1) checking.

10. A portable electronic device (SC) according to claim 9, wherein the portable electronic device (SC) comprises a third means (M3) able to create and initialize a new data set in the volatile memory area (OC), said new data set being associated to the first data (OB1) .

11. A portable electronic device (SC) according to any one of claims 9 to 10, wherein the portable electronic device (SC) comprises a fourth means (M4) able to clear the volatile memory area (OC) when a preset event occurs.

12. A portable electronic device (SC) according to one of claims 9 to 11, wherein said application (AP) is written in an object-oriented language, wherein said first data (OB1) is an object and wherein said portable electronic device (SC) comprises a virtual machine (VM).

13. A portable electronic device (SC) according to one of claims 9 to 12, wherein the application (AP) and the virtual machine (VM) comply with JavaCard ® 2.x standard requirements.

14. A portable electronic device (SC) according to anyone of claims 9 to 13, wherein said portable electronic device (SC) is a smart card.
